# EUROPÄISCHE PATENTSCHRIFT

(11) **EP 0 587 703 B1**
(45) Veröffentlichungstag und Bekanntmachung des Hinweises auf die Patenterteilung: **25.09.1996**
(21) Anmeldenummer: 92912099.6
(22) Anmeldetag: 12.06.1992
(51) Int. Cl.: C25B 11/02, H01M 4/86, C25B 9/00

(54) **ELEKTROLYSEZELLE FÜR GASENTWICKELNDE BZW. GASVERZEHRENDE ELEKTROLYTISCHE PROZESSE SOWIE VERFAHREN ZUM BETREIBEN DER ELEKTROLYSEZELLE**
ELECTROLYSIS CELL FOR GAS-EMITTING OR GAS-DISSIPATING ELECTROLYTIC PROCESSES AND PROCESS FOR RUNNING THE ELECTROLYSIS CELL
CELLULE D'ELECTROLYSE POUR PROCESSUS ELECTROLYTIQUES DEGAGEANT OU CONSOMMANT DES GAZ ET PROCEDE D'EXPLOITATION DE LA CELLULE D'ELECTROLYSE

(30) Priorität: 12.06.1991 DE 4119836
(43) Veröffentlichungstag der Anmeldung: 23.03.1994
(73) Patentinhaber: GALLIEN, Arnold, D-96450 Coburg (DE)
(72) Erfinder: GALLIEN, Arnold, D-96450 Coburg (DE)
(74) Vertreter: Ninnemann, Detlef, Dipl.-Ing.
(86) Internationale Anmeldenummer: DE9200499
(87) Internationale Veröffentlichungsnummer: WO9222681

(56) Entgegenhaltungen:
- EP-A- 0 159 138
- WO-A-91/00379
- US-A- 4 341 606

## Beschreibung

Die Erfindung betrifft eine Elektrolysezelle für gasentwickelnde bzw. gasverzehrende elektrolytische Prozesse nach dem Oberbegriff des Anspruchs 1 sowie ein Verfahren zum Betreiben der Elektrolysezelle.

Eine Elektrode, bestehend aus einer Vielzahl sehr dünner folienartiger Elemente mit paralleler Anordnung, beschreibt die DD-PS 285 125 sowie die WO 91/00379 A1. Zwischen den benachbarten Elementen einer Elektrode besteht ein schmaler, den Kapillareffekt hervorrufender Spalt.

Solche sehr dünnen feinstruktierten Elektroden besitzen einen hohen Wirkungsgrad. Einerseits ist die an der Reaktion beteiligte Fläche sehr groß, andererseits gewährleisten die Kapillarkräfte einen intensiven Elektrolytaustausch und den Abtransport des gebildeten Gases quer durch die Elektrode hindurch in den Entgasungsraum jenseits der Reaktionsfläche. Dieser Entgasungsraum muß je nach Bauhöhe der Elektrolysezelle einige Millimeter tief sein und belegt somit einen Raum in der Größenordnung der Elektrode selbst.

Auf den Entgasungsraum unter Beibehaltung der an sich sehr vorteilhaften kapillaren Bedingungen zwischen den Elektrodenelementen zu verzichten, ist nicht möglich, weil die im wesentlichen quer zur Elektrodenebene strukturierten Elektrodenelemente einen vertikalen Stofftransport kaum zulassen. In der DD-PS 285 127 und DD-PS 285 128 sind unterschiedlich profilierte Elektrodenelemente beschrieben. Sie dienen der Aufrechterhaltung der kapillaren Spalten durch einfache Positionierung benachbarter Elektrodenelemente sowie zu ihrer elektrischen Kontaktierung.

Aber auch bei Verwendung unprofilierter Elektrodenelemente und einer somit vertikal durchlässigen Kappilarspalt-Elektrode könnte man auf den Entgasungsraum nicht verzichten. In den kapillaren Spalten können die Gasblasen nicht ungehindert aufsteigen. Sie würden zu großen Blasen koagulieren, die die gesamte Elektrodenbreite einnehmen, und dann den Elektrolyten aus der Elektrode "ausblasen".

Aus der DD-PS 285 122 ist eine Elektrolysezelle bekannt, die auch ohne Verwendung einer den Anoden- und Kathodenraum trennenden Membran die Separierung der gebildeten Gase gewährleisten soll. Dazu sind die aus dünnen, folienartigen Elementen mit kapillarem Abstand aufgebauten Elektroden hinreichend gut gegen die sie umschließende Zellenwand abgedichtet. Der Abstand zwischen den Elektroden muß mindestens dem Dreifachen des Blasenablösedurchmessers entsprechen. Außerdem ist im oberen Zellenbereich eine Abschottung vorgesehen, die eine Vermischung der im Anoden- und Kathodenraum gebildeten Gase im oberen elektrolytfreien Raum verhindert.

Die FR 22 44 836 zeigt eine Elektrolysezelle mit einer Elektrode aus einer Vielzahl von parallelen länglichen Teilen, wobei die benachbarten Teile einen Abstand im Bereich von 1,5 bis 10 mm aufweisen sollen. Dadurch soll auch bei einem Elektrodenabstand von höchstens 6 mm und einer Stromdichte von 2 kA/m² das Ausblasen des Elektrolyten aus dem Reaktionsraum sicher verhindert werden. Nachteilig ist jedoch, daß selbst bei gebremster Schaumbildung die Gasblasen lange im Reaktionsraum zwischen den Elektroden verweilen, wodurch die elektrische Leitfähigkeit des Elektrolyten merklich herabgesetzt wird.

Eine Elektrode aus porösen Materialien beschreibt die FR-PS 2 308 701. Sie besteht aus einem sich selbst tragenden Verbund zweier poröser Schichten, wobei die reaktionsseitige Oberfläche der Elektrode mit einer isolierenden feuerfesten Oxydschicht verbunden ist, deren Porenradien höchstens den zehnten Teil der Porenradien des Elektrodenmaterials aufweisen. Die Oxydschicht ist hydrophil und wird vom Elektrolyten durchdrungen.

Das von der Elektrode in den großen Poren gebildete Gas kann nicht ohne weiteres in die kleineren Poren der Oxydschicht eindringen, so daß das Gas rückseitig der Elektrode austritt. Weiterhin wurde vorgeschlagen, die Rückseite der Elektrode mit einer hydrophoben gasdurchlässigen Schicht zu versehen, um das Gas hierdurch, vom Elektrolyten getrennt direkt in einem Entgasungsraum eintreten zu lassen.

Zwar vermeidet diese Elektrode jegliche Gasblasenbelastung des Elektrolyten zwischen Anode und Kathode, jedoch wird dieser Vorteil zumindest teilweise wieder durch die isolierende oxydische Schicht aufgegeben. Von besonderem Nachteil ist aber, daß derartige poröse Materialen wenig flexibel sind und sich deshalb zur Einrichtung eines allseitigen Elektroden-Null-Abstandes nicht eignen. Ihre relative Starrheit ist oft Ursache für Beschädigungen des Trennsystems, wie Membran bzw. Diaphragma. Es sind aber auch Belastungen, während des Betriebes der Elektrolysezelle zu berücksichtigen. So können vor allem Schwankungen von Temperatur und Druck zu erheblichen Belastungen und Relativbewegungen führen, die Rißbildungen in der Oxydschicht zur Folge haben können. Dies sind dann Orte unerwünschter Gasabscheidungen in dem Reaktionsraum der Eletrolysezelle zwischen Elektrode und Trennsystem.

Aus der EP-A-0 159 138 ist eine Elektrolysezelle unter Verwendung von stark strukturierten, jedoch geschlossenen Elektrodenflächen bekannt. Ihre Struktur ist gekennzeichnet von vertikal verlaufenden, einige Zentimeter zueinander beabstandeten ersten Hauptkanälen zur Elektrolytzufuhr und von dazwischen vorgesehenen zweiten Hauptkanälen zur Abfuhr der Reaktionsprodukte, insbesondere der Gase. Zwischen den Hauptkanälen erstrecken sich horizontal und parallel zur Membran verlaufende wesentlich feiner strukturierte Nebenkanäle, die die Reaktionsfläche mit Elektrolyt versorgen. Ein sogenannter Null-Abstand der Elektroden verhindert in diesem Bereich das Auftreten vertikaler Stoffströme.

Diese Elektrodenkonstruktion führt zu einer starken Gasanreicherung in den für die Gasabfuhr vorgesehenen Kanälen, die einen wesentlichen Teil der Reaktionsfläche bedecken. Dadurch steigt der elektrische Widerstand beträchtlich, was zur Verschlechterung des Wirkungsgrades der Elektrolysezelle führt. Nachteilig ist auch die massive Ausführung der Elektrode, was hohe Anforderungen bei der Erzeugung hochgradig ebener Reaktionsflächen zum Zwecke der Erzielung des Null-Abstandes erfordert.

Im Gegensatz zu den meisten Elektrolyseverfahren, bei denen die Elektroden vollständig vom Eletrolyten bedeckt sind, verwendet die Fallfilm-Elektrolyse einen Eletrolytstrom, der sicht von oben nach unten und damit entgegen des Gasblasenstromes bewegt. Um eine ausreichende Benetzung der Elektroden zu gewährleisten, muß meist mit einem erheblichen Eletrolytüberschuß gefahren werden, der am Kopf der Elektroden fein verteilt zugeführt wird. Die Anwendung der Fallfilm-Elektrolyse auf Kapillarspaltelektroden erscheint grundsätzlich geeingnet, das Problem der allseitigen und gleichmäßigen Elektrolytverteilung zu lösen. Es besteht jedoch zumindest bei solchen Elektroden mit vertikalen Gastransport die Gefahr des "Ausblasens" des Elektrolyten. Gerade weil beide Volumenströme, die von Eletrolyt und Gas, im oberen Eletrodenbereich maximal und außerdem entgegengesetzt gerichtet sind, erscheint die Anwendung der Fallfilm-Elektrolyse auf Elektroden mit kapillarbeabstandeten Elektrodenelementen problematisch.

Der Erfindung liegt die Aufgabe zugrunde, eine Elektrolysezelle für gasentwickelnde oder gasverzehrende Prozesse nach dem Oberbegriff des ersten Patentanspruchs zu entwickeln, die unter Gewährleistung neuartiger, verbesserter Elektrolyt- und Gastransporteigenschaften eine erhöhte Leistungsfähigkeit aufweist. Gleichzeitig soll die Elektrolysezelle eine größe Kompaktheit und damit ein günstigeres Raum-Leistungsverhältnis ermöglichen.

Außerdem soll ein Verfahren zum Betreiben der Elektrolysezelle bereitgestellt werden, das ihren zuverlässigen Betrieb bei hohem Wirkungsgrad garantiert. Die Bildung von Aerosolen ist zu vermeiden, um einen möglichst geringen Feuchtigkeitsgrad des Gases zu erreichen.

Die Aufgabe wird erfindüngsgemäß durch die Merkmale des kennzeichnenden Teils des ersten bzw. vierzehnten Patentanspruchs gelöst.

Danach schließt sich an den reaktionsseitigen Bereich der Elektrode wenigstens ein kapillarer Spalt an, der dem Gas- und Elektrolytransport entlang der Ebene der Elektrode, insbesondere in vertikaler Richtung, einen wesentlich geringeren Widerstand entgegensetzt als der Randbereich. Dabei besitzt der reaktionsseitige Randbereich der Elektrode eine solche kapillare Struktur, die den Gas- und Elektrolyttransport bevorzugt quer zur Elektrodenebene ermöglicht. Die kapillare Struktur kann einen quasi eindimensionalen oder zweidimensionalen Charakter aufweisen.

Es sollte die Verwendung einer flexiblen Elektrodenstruktur bevorzugt werden, wie sie beispielsweise sich bilden läßt aus einer Vielzahl dünner folienartiger, sich gegeneiander abstützender Elektrodenelemente, von denen wenigstens jedes zweite profiliert ist. Besonders einfach und billig herstellbar ist eine Elektrode aus solchen folienartigen Elektrodenelementen, deren Profilierungen sich auf wenigstens einen Randbereich beschränken, an den sich ein unprofilierter oder schwächer profilierter Bereich anschließt.

Dieser unprofilierte Bereich bildet den kapillaren Spalt für den im wesentlichen vertikal gerichteten Gas- und Elektrolyttransport. Die Profilierungen erstrecken sich auf einen oder beider Randbereiche der folienartigen Elemente, zumindest aber auf den an der Reaktion teilnehmenden Randbereich. Sie können auf unterschiedliche Weise, zum Beispiel durch Wellungen oder Schränkung des Randbereiches erzeugt werden. Auch Materialauftragungen sind vorteilhaft anwendbar, insbesondere wenn es sich dabei um ein besonders elektrochemisch aktives Material handelt.

Sehr wirkungsvoll sind poröse Strukturen, die beispielsweise unter Anwendung des CVD-Verfahrens (CVD - chemical vapor deposition) erzeugt wurden. Aber auch der elektrochemische Weg eignet sich zur Erzeugung solcher Profilierungen. So erhält man beispielsweise durch Abscheidung einer Nickel-Aluminium-Schicht, aus der anschließend das Aluminium wieder heraus gelöst wird (durch Auswaschen mit NaOH), eine poröse als Rhaney-Nickel bekannte Struktur. Sie eignet sich besonders für die Wasserelektrolyse.

Die Mächtigkeit (Dicke) der Materialauftragungen bzw. der Grad der Wellungen oder Schränkungen bestimmt die kapillaren Verhältnisse zwischen den sich gegeneinander abstützenden Elektodenelementen. Dabei sind die Verhältnisse entlang des profilierten Randbereichs, von denen im sich daran anschließenden Bereich zu unterscheiden. Je nach Ausführungsvariante der Elektrodenelemente weist eine 1 m große Elektrode 1 Million bis 10 Millionen Kontaktstellen im Randbereich zwischen benachbarten Elektrodenelementen auf.

Sie stellen einem vertikalen Flüssigkeits- und Gastransport einen erheblichen Widerstand entgegen und halten den Elektrolyt gleichsam eines Schwammes. Die Transportvorgänge verlaufen hier überwiegend horizontal, also quer zur Elektrodenebene.

Der sich an den Randbereich anschließende im wesentlichen unprofilierte Bereich stellt für die vertikalen Transportvorgänge einen sehr viel größeren (freien) Querschnitt zur Verfügung. Natürlich sind auch in diesem Bereich Profilierungen in dem Maße zulässig, wie sie zum Beispiel zur Stabilisierung der Elektrodenstruktur vorteilhaft sein können und dem Elektrolyt- und Gastransport keine für seine Funktion nachteilige Widerstandserhöhung entgegensetzen. Dieser Bereich soll im Sinne der Erfindung so lange als "im wesentlichen unprofiliert" gelten, so lange der Widerstand, welcher einem vertikalen Elektrolyt- und Gastransport im profilierten Randbereich entgegengesetzt wird, um ein Vielfaches (vorzugsweise mehr als 10-faches) größer ist, als der entsprechende Widerstand im daran angrenzenden im wesentlichen unprofilierten Bereich.

Die optimale geometrische Gestalt der erfindungsgemäßen Elektrode hängt von den Prozeß- und Stoffparametern ab. Als günstig hat sich erwiesen, den bzw. die profilierten Randbereiche auf 10 % bis 50 % der Breite der Elektrodenelemente festzulegen und in dem sich daran anschließenden Bereich eine Spaltweite von 5 Mikrometer bis 500 Mikrometer zu realisieren.

Eine vorteilhafte Weiterbildung der Elektrode sieht in dem im wesentlichen unprofilierten Bereich der Elektrodenelemente mindestens einen sich längs erstreckenden Verformungsbereich vor, der bei Krafteinwirkung quer zur Elektrodenebene eine Kontraktion der Elektrodenbreite zuläßt. Diese so geschaffene Elastizität der Elektrode gestattet die Verbindung mit der ihr eigenen hohen Flexiblität, so daß auch kleinste Abweichungen vom gewünschten Null-Abstand der Elektroden ausgeglichen werden. Die Elastizität der Elektrodenelemente im Verformungsbereich vermeidet lokale Überbeanspruchungen oder Beschädigungen des Trennsystems. Der Verformungsbereich stellt sich im weitesten Sinne als ein winklig zur Kraftrichtung gestalteter Bereich dar, dessen eingeschlossener Winkel bei Krafteinwirkung verkleinert wird.

Zur Erzeugung der erfindungsgemäßen Anordnung ist aber auch die Verwendung von Elektroden möglich, die sich selbst nicht über den kapillaren Randbereich hinaus erstrecken sondern diesen Randbereich selbst repräsentieren. Dazu eignen sich eindimensionale oder quasi eindimensionale Kapillarstrukturen, zum Beispiel in Form von flächigen Geweben oder Gewirken, von feinmaschigen Wabenstrukturen oder auch in Form von gestappelten Fasern. Eine weitere Möglichkeit besteht in der Verwendung poröser schwammartiger sich selbst tragender Flächengebilde, die aber möglichst flexibel sein sollten.

Zur Verbesserung des Elektrolythaltevermögens ist es vorteilhaft einen Randbereich mit hydrophilen Eigenschaften und zur Verbesserung des vertikalen Elektrolyttransportes einen kapillaren Spalt mit hydrophoben Eigenschaften zu benutzen.

Zum Betreiben der erfindungsgemäßen Elektrolysezelle wird nachfolgend ein Verfahren vorgeschlagen, das gekennzeichnet ist durch eine Anfahrphase mit hohem Elektrolytstand und eine Betriebsphase mit vergleichsweise niedrigem Elektrolytstand in der Zelle. Während der Anfahrphase erfolgt die Benetzung der trockenen kapillaren Elektroden. Der Elektrolyt muß während des Befüllens der Zelle einen so hohen Stand erreichen, daß die Gasblasenentwicklung ausreicht, den Elektrolyt bis zur Oberkannte der Elektrode zu transportieren. Am sichersten wird die allseitige Benetzung der Elektroden durch Fluten der Zelle bis zum Kopf erzielt. Danach kann unmittelbar auf den sehr viel niedrigeren Elektrolytstand des Betriebszustandes zurück gegangen werden. Er muß aber stets so hoch gehalten werden, daß sich die Elektrode ununterbrochen vollständig mit Elektrolyt versorgen kann. Als auf jeden Fall ausreichend kann eine solche Elektrolytmenge je Elektrodenkammer angesehen werden, die der speicherbaren Elektrolytmenge in den kapillaren Zwischenräumen der profilierten Randbereiche entspricht.

Der tatsächlich zu bevorratende minimalste Elektrolytbedarf am Fußende der Elektrode kann noch erheblich geringer sein. Er ist nicht nur von den geometrischen Bedingungen der Elektrode, sondern auch maßgeblich von den Stoff- und Materialeigenschaften sowie den Prozeßbedingungen (Druck, Temperatur, Spannung, Strom) und ihren Schwankungen abhängig. So werden zum Beispiel die elektrochemischen Eigenschaften und die Transportvorgänge von den Oberflächeneigenschaften des Elektrodenmaterials beeinflußt. Eine für die erfindungsgemäße Elektrodenstruktur vorteilhafte Modifikation verwendet hydrophile profilierte Randbereiche, an die sich der hydrophobe Bereich für den Gas- und Elektrolyttransport anschließt.

Zur Durchführung gasverzehrender elektrolytischer Prozesse wird die Elektrolysezelle und damit die Elektroden von unten mit dem entsprechenden Gas gespeist. Dabei muß die Gasmenge so groß gewählt werden, daß hinreichend intensive Transportvorgänge zur Versorgung der Elektroden aufrecht erhalten werden. Die Elektrolysezelle kann auch bei erhöhtem Druck und erhöhter Temperatur betrieben werden, so daß ein Teil des Elektrolyten in der Dampfphase vorliegt.

Nachfolgend werden Aufbau und Wirkungsweise der Elektrolysezelle anhand der Figuren näher beschrieben. Die Figuren zeigen schematisch (nicht maßstäblich) einige Varianten möglicher Gestaltungen der Erfindung.

Es zeigen:
- Figur 1: Anode und Kathode mit zwischenliegendem Trennelement
- Figur 2a: Vergrößerter Ausschnitt einer Elektrode mit wechselseitig durch Wellungen profilierten Elektrodenelementen
- Figur 2b: Vergrößerter Ausschnitt einer Elektrode mit beidseitig durch Schränkungen der Randbereiche profilierten Elektrodenelementen, die alternierend mit unprofilierten Elektrodenelementen angeordnet sind
- Figur 3-8: Schematische Darstellung verschiedener Varianten von erfindungsgemäß profilierten Elektrodenelementen mit einem Verformungsbereich zwischen den Profilierungen
- Figur 9a: Monopolare Anordnung einer Elektrode mit im wesentlichen eindimensional gerichteter Kapillarstruktur aus einem gewebten oder gewirkten Flächengebilde
- Figur 9b: Bipolare Elektrodenanordnung unter Verwendung einer Elektrode mit im wesentlichen eindimensional gerichteter Kapillarstruktur
- Figur 10a und Figur 10b: Draufsichten der Figuren 9a bzw. 9b

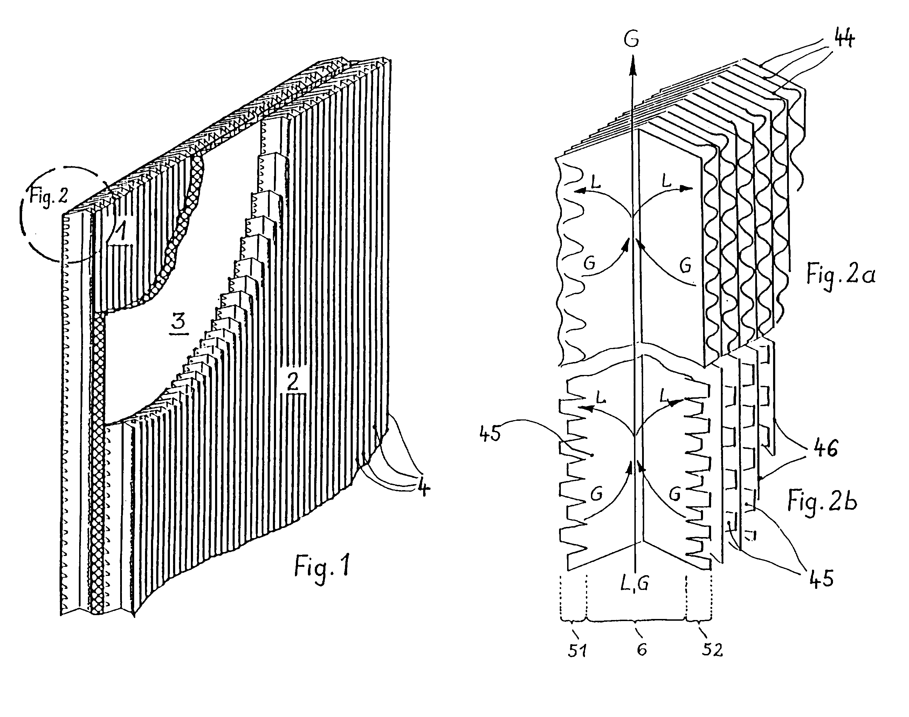

Figur 1 zeigt den Ausschnitt einer Anordnung von Anode 1 und Katode 2 mit einem zwischenliegenden Trennsystem 3, zum Beispiel einer Membran. Die Vergrößerung eines Elektrodenteils ist in Figur 2 dargestellt. Als Grundmaterial werden für die Elektrodenelemente 4, 40, 41, 42, 43, 44, 45, 46 folienartige Bänder mit einer Dicke von etwa 20 Mikrometer bis 100 Mikrometer und eine Breite von ca. 1 mm bis 10 mm verwendet.

Figur 2a zeigt wechselseitig durch Wellung eines Randbereiches 51 bzw. 52 profilierte Elektrodenelemente 44. Die Elektrodenelemente 45 gemäß Figur 2b tragen in beiden Randbereichen 51, 52 Schränkungen und sind mit unprofilierten Elektrodenelementen 46 alternierend angeordnet. Die Profilierungen sind stets so ausgebildet, daß sie sich zur Realisierung des gewünschten Abstandes zwischen den sich gegeneinander im Randbereich 51, 52 abstützenden benachbarten Elektrodenelementen eignen.

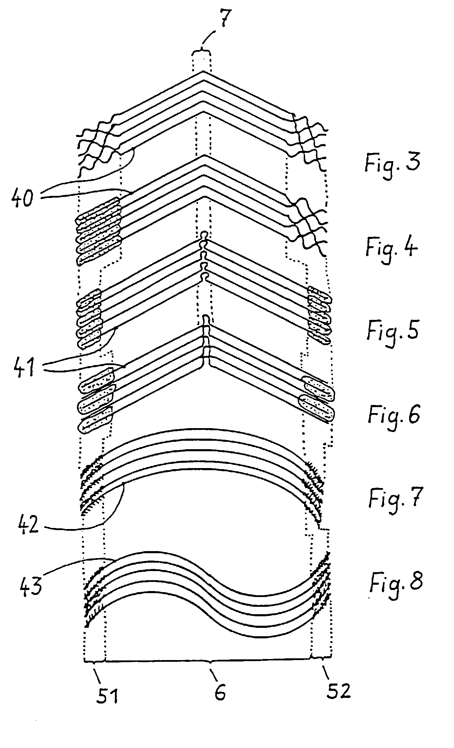

Aus der Draufsicht der Elektroden (Figur 3 und 4) erkennt man den Verformungsbereich 7, der der Elektrode quer zu ihrer Reaktionsfläche Elastizität verleiht. Es handelt sich dabei um eine einfache Abwinklung der Elektrodenelemente 40 entlang ihrer Längsachsen.

Die in Figur 4 dargestellten Elektrodenelemente 40 besitzen in dem einen Randbereich 52 die schon beschriebenen Profilierungen in Form von Wellungen bzw. Schränkungen. Im anderen Randbereich 51 weisen sie Materialauftragungen auf, die vorzugsweise aus einem elektrochemisch aktiven und porösen Material bestehen. Zur Gewährleistung gleichmäßiger Abstände der Elektrodenel'emente 4, 40, 41, 42, 43, 44, 45, 46 vorzugsweise 5 Mikrometer bis 500 Mikrometer im Bereich 6, und zur Verbesserung der Elektrodenstabilität ist es von Vorteil, in beiden Randbereichen 51, 52 der Elektrode Profilierungen anzubringen.

Die Figuren 5 und 6 zeigen die Draufsicht von Elektrodenausschnitten für eine bipolare Elektrodenanordnung. Sie tragen deshalb auf beiden Randbereichen 51, 52 spezielle elektrochemisch aktive Beschichtungen (Proflierungen). Diese Elektroden unterscheiden sich hinsichtlich ihrer Elektrodenelemente 41 dadurch, daß gemäß Figur 5 jeder Randbereich 51, 52 der Elektrodenelemente profiliert ist, während gemäß Figur 6 jeweils nur ein Randbereich 51 oder 52 eines Elektrodenelements eine profilierende Beschichtung trägt, wobei jedoch benachbarte Elektrodenelemente zueinander alternierend angeordnet sind.

Im Verformungsbereich 7 verläuft längs der Elektrodenelemente 41 eine rinnenartige Verformung, die sich auch zur Aufnahme eines Dichtungs- oder Klebemittels eignet, um die beiden bipolaren Bereiche der Elektrode gasdicht voneinander zu trennen. In den Figuren 7 und 8 sind zwei weitere Möglichkeiten einer elastischen Elektrodengestaltung dargestellt. Sie zeigen einen U-förmigen bzw. einen S-förmigen Verformungsbereich.

Die Wirkungsweise der erfindungsgemäßen Elektrode wird von der feingliedrigen kapillaren Struktur, aber auch von den in ihr ablaufenden Transportvorgängen bestimmt. Die auf den vorderen Elektrodenelement 44 bzw. 45 (siehe Figur 2) dargestellten Pfeile deuten schematisch und stark vereinfacht die Transportmechanismen des Gases (G) und des Elektrolyten (L-Liquid) an.

Bei der Beschreibung der Wirkungsweise der erfindungsgemäßen Elektrolysezelle wird ausgegangen von einem üblichen Betriebszustand, der durch einen geringen Füllungsgrad mit Elektrolyt gekennzeichnet ist. An dem im Elektrolyten stehenden Fußbereich der Elektrode bildet sich Gas, das unter Wirkung der Kapillarkraft in den inneren Bereich 6 der Elektrode wandert. Die Gasblasen tragen beim Verlassen des unter Elektrolyt stehenden Fußbereichs eine gewisse Menge Elektrolyt in den kapillaren Spalten aufwärts. Aus dem Randbereich 51 und/oder 52 der Reaktionsfläche tritt weiteres Gas hinzu und beschleunigt die vertikale Aufwärtsbewegung von Gas und Elektrolyt. Während des Tranportes steht der Elektrolyt getrieben vom Gas stets im Einflußbereich der feiner strukturierten Randbereiche 51, 52 und der dort größeren Kapillarkräfte. Besteht im Randbereich 51, 52 ein Sättigungsdefizit an Elektrolyt, so wird ein entsprechender Teil aufgenommen; der übrige Teil wird weiter transportiert. Es kommt aber auch zu vielfältigen Austauscheffekten des Elektrolyten entlang seines vertikalen Transportweges.

Der Transport von Elektrolyt und Gas erfolgt innerhalb der Elektrode und zwar im Gleichstrom. Die Elektrode versorgt sich selbst mit genau der optimalen Menge an Elektrolyt. Je größer der Verbrauch an Elektrolyt ist, desto heftiger ist auch die Reaktion und die Gasbildung und um so intensiver ist der Elektrolyttransport.

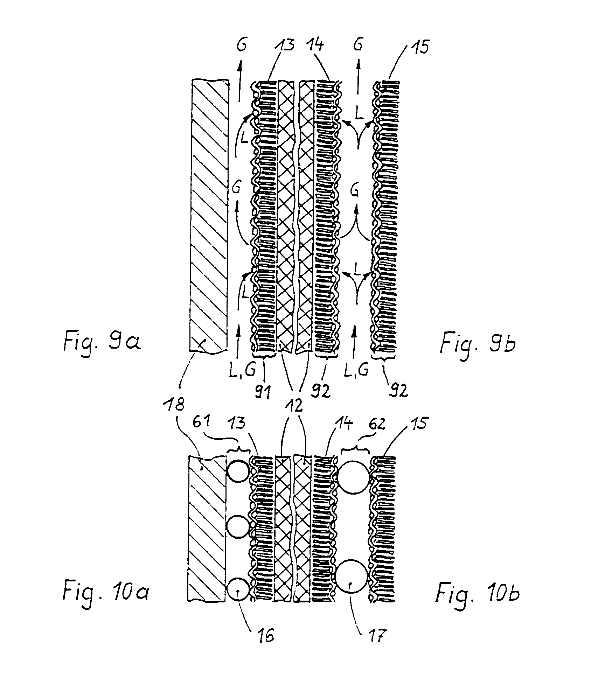

Gleichartige Transportvorgänge laufen auch ab, wenn ein Zellenaufbau gemäß den Figuren 9 und 10 gewählt wird. Die Verwendung einer im wesentlichen eindimensionalen Kapillarstruktur macht die Verwendung eines separaten kapillaren Spaltes zum Gas- und Elektrolyttransport notwendig. Die Integration dieses kapillaren Spaltes und des oder der profilierten Randbereiche in die Elektrode selbst, wie dies bei Verwendung von folienartigen Bändern zur Bildung der Elektrodenstruktur möglich war, ist hier ausgeschlossen. So stellen die Elektroden 13, 14, 15 die kapillaren Randbereiche 91, 92 dar, an die sich der kapillare Spalt, welcher zum Gas- und Elektrolyttransport vorgesehen ist, anschließt. Die Erzeugung des Spaltes erfolgt gemäß der in Figur 9a bzw. 10a dargestellten Variante durch Abstandshalter 16, die zwischen der Elektrode 13 und einer Wandung 18 der Elektrolysezelle liegen.

Die Figuren 9b und 10b zeigen eine bipolare Elektrodenanordnung, wobei die Elektroden 14, 15 durch Abstandshalter 17 positioniert sind und einen dazwischenliegenden kapillaren Spalt 61 frei geben. Anstelle der in diesen Figuren angedeuteten gewebeartigen Elektrodenstruktur kann natürlich auch eine poröse oder schwammartige Elektrode verwendet werden. Zur Verbesserung des Elektrolythaltevermögens in den kapillaren Randbereichen 51, 52, 91, 92, die an die Reaktionsfläche der Elektrode angrenzen sind diese Randbereiche 51, 52, 91,92 hydrophil ausgebildet. Der daran angrenzende kapillare Spalt 62 besitzt zur Verbesserung des vertikalen Transportverhaltens hydrophobe Eigenschaften.

Die Selbstversorgung der Elektrode aufgrund des Mitreißens des Elektrolyten durch das Gas stellt in der Elektrolysetechnik einen neuen Effekt dar, wodurch die Eigenschaften der erfindungsgemäß gestalteten Elektrolysezellen wesentlich verändert werden. Die Bezeichnung
"Ejektorzelle"
erscheint als ausreichend charakterisierender Begriff hierfür.

Ein weitere Vorteil dieser Elektrode besteht in der Produktion sehr trockenen Gases. Grundlage hierfür bilden wieder die Transportvorgänge in der Elektrode:

Die an der Reaktionsfläche gebildeten Gasblasen durchqueren zunächst den profilierten Randbereich 51, 52, 91, 92 und koagulieren dabei mehrfach. Beim Aufsteigen des Gases im unprofilierten kapillaren Bereich 6, 61, 62 kommt es dann zur Bildung von großräumigen Gasansammlungen, was die Entstehung von Aerosolen am Kopf der Elektrode verhindert.

Außerdem hat die Vereinigung des Transportraumes von Gas und Elektrolyt die Bereitstellung breiter separater Entgasungsräume überflüssig gemacht. Kompaktere Elektrolysezellen mit einem verbesserten Raum-Leistungsverhältnis können somit leicht zur Verfügung gestellt werden.

## Patentansprüche

1. Elektrolysezelle für gasentwickelnde oder gasverzehrende elektrolytische Prozesse mit mindestens einer Elektrode, die in ihrem reaktionsseitigen Randbereich eine solche Kapillarstruktur mit innerhalb der Kapillarstruktur eindimensional oder zweidimensional wirkenden Kapillarkräften besitzt, daß der Gas- und Elektrolyttransport dort im wesentlichen quer zur Elektrodenebene verläuft,
**dadurch gekennzeichnet,**
daß sich an diesen Randbereich (51, 52, 91, 92) wenigstens ein kapillarer Spalt anschließt, der dem Gas- und Elektrolyttransport (L, G) entlang der Elektrodenebene, insbesondere in vertikaler Richtung, einen wesentlich geringeren Widerstand entgegensetzt als der Randbereich (51, 52, 91, 92).

2. Elektrolysezelle nach Anspruch 1, **dadurch gekennzeichnet**, daß eine Elektrode, die aus einer Vielzahl dünner folienartiger sich gegeneinander abstützender Elektrodenelemente besteht, von denen wenigstens jedes zweite profiliert ist, den Randbereich (51, 52) bildet.

3. Elektrolysezelle nach Anspruch 1 und 2, **dadurch gekennzeichnet,** daß sich die Profilierungen auf wenigstens einen Randbereich (51, 52) der Elektrodenelemente (4, 40, 41, 42, 43, 44, 45) beschränken, an den sich ein unprofilierter oder schwächer profilierter Bereich (6) anschließt, der den kapillaren Spalt für den im wesentlichen vertikalen Gas- und Elektrolyttransport bildet.

4. Elektrolysezelle nach Anspruch 3, **dadurch gekennzeichnet,** daß die Profilierungen Wellungen oder Schränkungen des Materials der Elektrodenelemente (4, 40, 41, 42, 43, 44, 45) sind.

5. Elektrolysezelle nach Anspruch 3, **dadurch gekennzeichnet,** daß die Profilierungen durch Materialauftragung gestaltet sind, insbesondere aus elektrokatalytisch aktiven Material, welches vorzugsweise porös ist.

6. Elektrolysezelle nach Anspruch 3 und 5, **dadurch gekennzeichnet,** daß die Profilierungen aus einer porösen Raney-Nickel-Legierung bestehen, an die sich hydrophobe mittige Bereiche (6) anschließen.

7. Elektrolysezelle nach mindestens einem der Ansprüche 3-6, **dadurch gekennzeichnet,** daß sich die profilierten Randbereiche (51, 52) über 10 bis 50% der Breite der Elektrodenelemente (4, 40, 41, 42, 43, 44, 45) erstrecken.

8. Elektrolysezelle nach Anspruch 1 und/oder 3, **dadurch gekennzeichnet**, daß der an den kapillaren Randbereich (51, 52, 91, 92) angrenzende kapillare Spalt oder der mittlere Abstand der benachbarten Elektrodenelemente (4, 40, 41, 42, 43) im Bereich (6) eine Weite von 5 bis 500 µm aufweist.

9. Elektrolysezelle nach Anspruch 3, **dadurch gekennzeichnet**, daß zwischen den Randbereichen (51, 52) der Elektrodenelemente (4, 40, 41, 42, 43, 44, 45, 46) mindestens ein Verformungsbereich (7) liegt, der bei Krafteinwirkung quer zur Elektrodenebene eine Kontraktion der Breite der Elektrodenelemente (4, 40, 41, 42, 43, 44, 45, 46) und damit der Dicke der Elektrode (1, 2) selbst zuläßt.

10. Elektrolysezelle nach Anspruch 1, **dadurch gekennzeichnet,** daß eine dichte, gerichtete, im wesentlichen eindimensionale Kapillarstruktur den Randbereich (91, 92) bildet, wobei die Längsachsen der Kapillaren mit der Horizontalen höchstens einen Winkel von 75° einschließen.

11. Elektrolysezelle nach Anspruch 1 und 10, **dadurch gekennzeichnet**, daß ein flächiges Gewebe oder ein Gewirk oder eine feinmaschige Wabenstruktur oder gestappelte Fasern den Randbereich (91, 92) bilden.

12. Elektrolysezelle nach Anspruch 1, **dadurch gekennzeichnet,** daß ein poröses, schwammartiges, sich selbst tragendes und möglichst flexibles Flächengebilde den Randbereich (91, 92) bildet.

13. Elektrolysezelle nach Anspruch 1, **dadurch gekennzeichnet,** daß der Randbereich (51, 52, 91, 92) zur Verbesserung des Elektrolythaltevermögens hydrophile Eigenschaften und der kapillare Spalt zur Verbesserung des vertikalen Transportverhaltens hydrophobe Eigenschaften besitzt.

14. Verfahren zum Betreiben einer Elektrolysezelle für gasentwickelnde oder gasverzehrende eletrolytische Prozesse nach einem oder mehreren der Ansprüche 1 bis 13,
**dadurch gekennzeichnet,** daß
während der Anfahrphase der Elektrolysezelle mindestens ein so hoher Elektrolytstand erreicht wird, daß die Gasblasenentwicklung ausreicht, den Elektrolyten bis zur Oberkante der Elektroden zu transportieren, so daß die Elektrode vollständig mit Elektrolyt versorgt wird, was von den geometrischen Bedingungen der Elektrolysezelle, von den Stoff- und Materialeigenschaften sowie von den Prozeßparametern Druck, Temperatur, Spannung und Strom abhängig ist, und daß beim Übergang in den Betriebszustand der Elektrolytstand höchsten so weit abgesenkt wird, daß eine ununterbrochene Versorgung der gesamten Elektrode aufrechterhalten wird.

15. Verfahren nach Anspruch 14, **dadurch gekennzeichnet,** daß die Elektrolysezelle bei gasverzehrenden Prozessen mit dem entsprechenden Gas von unten gespeist wird.

16. Verfahren nach Anspruch 14, **dadurch gekennzeichnet,** daß die Elektrolysezelle bei erhöhtem Druck und erhöhter Temperatur, wobei vorzugsweise ein Teil des Elektrolyten in der Dampfphase vorliegt, betrieben wird.

## Claims

1. Electrolysis cell for gas-developing or gas-consuming electrolytic processes with at least one electrode which has in its marginal area on the reaction side a capillary structure with capillary forces acting one-dimensionally or two-dimensionally inside the capillary structure such that the gas and electrolyte are transported there substantially across the electrode plane,
characterised in that at least one capillary gap adjoins this marginal area (51,52,91,92) and opposes the gas and electrolyte transport (L,G) along the electrode plane, more particularly in the vertical direction, with a substantially lower resistance than the marginal edge area (51,52,91,92).

2. Electrolysis cell according to claim 1 characterised in that an electrode which consists of several thin foiltype mutually supporting electrode elements of which at least each second element is profiled, forms the marginal area (51,52).

3. Electrolysis cell according to claims 1 and 2 characterised in that the profiled structures are restricted to at least one marginal area (51,52) of the electrode elements (4, 40, 41, 42, 43, 44, 45) which is adjoined by an unprofiled or slightly profiled area (6) which forms the capillary gap for the substantially vertical gas and electrolyte transport.

4. Electrolysis cell according to claim 3 characterised in that the profiled structures are undulations or restrictions in the material of the electrode elements (4, 40, 41, 42, 43, 44, 45).

5. Electrolysis cell according to claim 3 characterised in that the profiled structures are formed by a material coating, more particularly of electrocatalytically active material which is preferably porous.

6. Electrolysis cell according to claim 3 and 5 characterised in that the profiled structures consist of a porous Raney-nickel alloy adjoined by hydrophobic central areas (6).

7. Electrolysis cell according to at least one of claims 3 to 6 characterised in that the profiled marginal areas (51, 52) extend over 10 to 50% of the width of the electrode elements (4, 40, 41, 42, 43, 44, 45).

8. Electrolysis cell according to claims 1 and/or 3 characterised in that the capillary gap adjoining the capillary marginal area (51, 52, 91, 92) or the mean spacing of the adjoining electrode elements (4,40, 41, 42, 43, 44, 45) has in the area (6) a width of 5 to 500 um.

9. Electrolysis cell according to claim 3 characterised in that between the marginal areas (51, 52) of the electrode elements (4,40, 41, 42, 43, 44, 45) there is at least one deformation area (7) which in the event of force acting across the electrode plane allows the width of the electrode elements (4,40, 41, 42, 43, 44, 45) to be contracted and similarly thus the thickness of the electrode (1,2) itself.

10. Electrolysis cell according to claim 1 characterised in that a compact aligned substantially single-dimensional capillary structure forms the marginal area (91, 92) wherein the longitudinal axes of the capillaries include at maximum an angle of 75 degs. with the horizontal.

11. Electrolysis cell according to claim 1 and 10 characterised in that a flat surface woven or knitted fabric or a fine-mesh honeycomb structure or stapled fibres form the marginal area (91,92).

12. Electrolysis cell according to claim 1 characterised in that a porous sponge-type self-supporting and as flexible as possible surface structure forms the marginal area (91,92).

13. Electrolysis cell according to claim 1 characterised in that the marginal area (51, 52, 91, 92) has hydrophilic properties to improve the electrolyte behaviour and the capillary gap has hydrophobic properties to improve the vertical transport behaviour.

14. Method for operating an electrolysis cell for gas-developing or gas-consuming electrolytic processes according to one or more of claims 1 to 13
characterised in that during the starting phase of the electrolysis cell at least one electrolyte level is reached which is so high that the gas bubble development is sufficient to transport the electrolyte up to the upper edge of the electrodes so that the electrode is completely supplied with electrolyte which is dependent on the geometric conditions of the electrolysis cell, on the material and substance properties as well as on the process parameters pressure, temperature, voltage and current and that during the transition into the operating state the electrolyte level is lowered at most so far that an uninterrupted supply of the entire electrode is maintained.

15. Method according to claim 14 characterised in that the electrolysis cell is fed from below with the corresponding gas in the case of gas-consuming processes.

16. Method according to claim 14 characterised in that the electrolysis cell is operated with increased pressure and increased temperature wherein preferably a part of the electrolyte exists in the steam phase.

## Revendications

1. Cellule d'électrolyse pour procédés électrolytiques développant du gaz ou consommant du gaz,avec au moins une électrode qui possède, dans sa zone de bordure côté réaction, une structure capillaire avec, à l'intérieur de la structure capillaire, des forces capillaires agissant sur une dimension ou sur deux dimensions, de façon que le transport de gaz et d'électrolyte se passe là, essentiellement transversalement au plan de l'électrode,
caractérisée en ce que,
à cette zone de bordure (51, 52, 91, 92) se raccorde au moins une fente capillaire qui oppose, au transport du gaz et de l'électrolyte (L, G) le long du plan de l'électrode, en particulier en direction verticale, une résistance considérablement moindre que la zone de bordure (51, 52, 91, 92).

2. Cellule d'électrolyse selon la revendication 1, caractérisée en ce qu'une électrode qui se compose d'un certain nombre d'éléments d'électrode mutuellement soutenus en forme de feuille mince, dont au moins un sur deux est profilé, forme la zone de bordure (51, 52).

3. Cellule d'électrolyse selon la revendication 1 et 2, caractérisée en ce que les profilages se limitent au moins à une zone de bordure (51, 52) des éléments d'électrode (4, 40, 41, 42, 43, 44, 45) où se raccorde une zone non profilée ou faiblement profilée (6) qui forme la fente capillaire pour le transport essentiellement vertical du gaz ou de l'électrolyte.

4. Cellule d'électrolyse selon la revendication 3, caractérisée en ce que les profilages sont des ondulations ou des pentes du matériau des éléments d'électrode (4, 41, 42, 43, 44, 45).

5. Cellule d'électrolyse selon la revendication 3, caractérisée en ce que les profilages sont configurés par due apports de matière, en particulier d'une matière électrocatalytiquement active, qui est avantageusement poreuse.

6. Cellule d'électrolyse selon la revendication 3 et 5, caractérisée en ce que les profilages se composent d'un alliage poreux de nickel de Raney, où se raccordent des zones intermédiaires hydrophobes (6).

7. Cellule d'électrolyse selon au moins l'une des revendications 3-6, caractérisée en ce que les zones profilées de bordure (51, 52) s'étendent sur 10 à 50% de la largeur des éléments d'électrode (4, 40, 41, 42, 43, 44, 45).

8. Cellule d'électrolyse selon la revendication 1 et/ou 3, caractérisée en ce que la fente capillaire se raccordant à la zone de bordure capillaire (51, 52, 91, 92) ou bien la distance moyenne d'éléments voisins d'électrode (4, 40, 41, 42, 43) dans la zone (6) présente une largeur de 5 à 500 µm.

9. Cellule d'électrolyte selon la revendication 3, caractérisée en ce qu'entre les zones de bordure (51, 52) des éléments d'électrode (4, 40, 41, 42, 43, 44, 45, 46) il y a au moins une zone de déformation (7) qui permet, sous l'effet des forces transversalement au plan de l'électrode, une contraction de la largeur des éléments d'électrode (4, 40, 41, 42, 43, 44, 45, 46) et ainsi de l'épaisseur de l'électrode (1, 2).

10. Cellule d'électrolyse selon la revendication 1, caractérisée en ce qu'une structure capillaire dense, dirigée essentiellement à une dimension, forme la zone de bordure (91, 92), les axes longitudinaux des capillaires formant, avec l'horizontale, au plus un angle de 75°.

11. Cellule d'électrolyse selon la revendication 1 et 10, caractérisée en ce qu'un tissu mince ou un tricot ou une structure en nid d'abeilles fine, ou bien des fibres empilées forment le zone de bordure (91, 92).

12. Cellule d'électrolyse selon la revendication 1, caractérisée en ce qu'un produit plat poreux ressemblent b une éponge autonome et, si possible, flexible, forme la zone de bordure (91, 92).

13. Cellule d'électrolyse selon la revendication 1, caractérisée en ce que la zone de bordure (51, 52, 91, 92) possède, pour l'amélioration du pouvoir de retenue de l'électrolyte, des propriétés hydrophiles et la fente capillaire possède, pour l'amélioration du comportement de transport vertical, des propriétés hydrophobes.

14. Procédé de fonctionnement d'une cellule d'électrolyse pour des procédés électrolytiques développant du gaz ou consommant du gaz selon l'une quelconque des revendications 1 à 13, caractérisé en ce que,
pendant la phase de démarrage de la cellule d'électrolyse, on a atteint un niveau suffisamment haut de l'électrolyte pour qu'au moins le développement de bulles de gaz suffise à transporter l'électrolyte jusqu'au bord supérieur de l'électrode, de manière que l'électrode soit totalement alimentée en électrolyte, ce qui dépend des conditions géométriques de la cellule d'électrolyse, des propriétés de matière et de matériau ainsi que des paramètres de traitement, pression, température, tension et courant, et en ce qu'au passage à l'état de fonctionnement, le niveau de l'électrolyte est au plus abaissé, au point que l'on puisse maintenir une alimentation ininterrompue de toute l'électrode.

15. Procédé selon la revendication 14, caractérisé en ce que la cellule d'électrolyse, pour des procédés consommant du gaz, est alimentée en gaz correspondant du dessous.

16. Procédé selon la revendication 14, caractérisé en ce que la cellule d'électrolyse fontionne à pression élevée et à température élevée, ce par quoi avantageusement, une partie de l'électrolyte se trouve en phase vapeur.
